# FASCICULE DE BREVET EUROPEEN

(11) **EP 3 124 172 B1**
(45) Date de publication et mention de la délivrance du brevet: **18.04.2018**
(21) Numéro de dépôt: 16181627.7
(22) Date de dépôt: 28.07.2016
(51) Int. Cl.: B23P 19/06

(54) **SYSTÈME DE SUPPORT-OUTIL**
WERKZEUGHALTERUNGSSYSTEM
TOOL-SUPPORTING SYSTEM

(30) Priorité: 29.07.2015 FR 1557253
(43) Date de publication de la demande: 01.02.2017
(73) Titulaire: AIRBUS OPERATIONS (S.A.S), 31060 Toulouse (FR)
(72) Inventeur: LOIACONO, Giovanni, 44600 Saint Nazaire (FR); LELAY, Marc, 44550 Montoir de Bretagne (FR); JESU-PLU, Marion, 44600 Saint Nazaire (FR); LE-HENAFF, Perig, 44160 Pontchâteau (FR); VASELLI, Fabio, 20141 Milano (IT)
(74) Mandataire: Gicquel, Olivier Yves Gérard

(56) Documents cités:
- EP-A1- 2 093 641
- EP-A1- 2 835 233
- JP-A- 2001 079 637
- US-A1- 2004 262 020
- US-A1- 2006 159 539
- US-A1- 2008 244 888

## Description

### DOMAINE TECHNIQUE

La présente invention concerne un système de support-outil pour un outil, comme par exemple une visseuse, permettant de positionner automatiquement l'outil par rapport à des trous au niveau desquels ledit outil doit intervenir, par exemple pour visser une vis, ainsi qu'un procédé de fonctionnement d'un tel système de support-outil. Un tel système de support-outil peut être utilisé en particulier pour une visseuse dans le cadre de la fixation de vis dans un plancher d'un aéronef.

### ETAT DE LA TECHNIQUE ANTERIEURE

Dans le cadre de la construction d'un aéronef présentant un plancher, il est nécessaire de fixer ledit plancher à l'aide de vis. Les positions des vis varient d'un aéronef à un autre, et il n'existe aucune solution permettant de visser automatiquement chacune des vis. La solution actuellement mise en oeuvre consiste pour un opérateur à repérer visuellement chaque trou et à y visser une vis. Une telle solution nécessite que l'opérateur reste en position basse ou à genou, qui sont des positions relativement désagréables à longs termes.

Le document US20080244888 décrit un dispositif d'installation de fixation dans une pièce à usiner dont les déplacements sur la pièce sont contrôlés par ordinateur. Le dispositif d'installation de fixation comprend les outils, les fixations ainsi que tous les organes de motorisation et de contrôle permettant un déplacement autonome.

### EXPOSE DE L'INVENTION

Un objet de la présente invention est de proposer un système de support-outil qui ne présente pas les inconvénients de l'art antérieur et qui en particulier permet le positionnement d'un outil par rapport à des trous que le plancher présente et l'activation de l'outil après ce positionnement, comme par exemple le serrage automatique d'une vis dans chacun des trous d'un plancher.

A cet effet, est proposé un système de support-outil pour travailler des trous d'une surface, ledit système de support-outil comportant :
- un premier et un deuxième rail parallèles entre eux et fixés sur la surface, chacun des rails présentant des empreintes régulièrement réparties sur sa longueur, et
- un support-outil mobile comportant :
   - un système optique configuré pour capturer au moins une image de la surface et apte à être déplacé sur le support-outil mobile,
   - pour chaque rail, au moins une roue apte à être déplacée sur ledit rail, et
   - un outil apte à être déplacé sur le support-outil mobile et portant un embout de travail,
- une unité de contrôle configurée pour commander le déplacement du support-outil mobile sur les rails, le déplacement de l'outil et le déplacement du système optique sur le support-outil mobile,
ledit système de support-outil étant tel que, pour chaque rail, au moins une des au moins une roue se déplaçant sur ledit rail comporte sur sa bande de roulement des contre-empreintes, chacune ayant une forme complémentaire à celle des empreintes dudit rail et tel que l'unité de contrôle est configurée pour :
- analyser une image capturée par le système optique et détecter la présence et une position réelle d'un trou,
- calculer la distance entre la position réelle du trou et une position attendue du trou et comparer cette distance à un seuil prédéfini, et
- vérifier si la partie de la surface pouvant être atteinte par l'outil a été entièrement balayée par le système optique.

Un tel système de support-outil peut donc se déplacer sans glisser le long des rails tout en détectant les trous pour y appliquer une action, comme le vissage d'une vis. Le système de support-outil ne nécessite donc pas l'intervention de l'opérateur, facilitant ainsi son travail.

Avantageusement, chaque empreinte est un perçage et chaque contre-empreintes est un ergot.

Avantageusement, le support-outil comprend :
- un chariot menant comportant un châssis menant, un coulisseau longitudinal monté coulissant sur le châssis menant parallèlement à une direction longitudinale des rails, un premier système d'entraînement motorisé agencé pour déplacer le coulisseau longitudinal le long du châssis menant, et deux roues meneuses, chacune étant motorisée et montée mobile en rotation sur le châssis menant autour d'un axe de rotation parallèle au plan du premier rail et perpendiculaire à la direction longitudinale, chacune des deux roues meneuses étant pourvue de contre-empreintes,
- un chariot mené comportant un châssis mené, et deux roues menées, chacune étant montée mobile libre en rotation sur le châssis mené autour d'un axe de rotation parallèle au plan du deuxième rail et perpendiculaire à la direction longitudinale, chacune des deux roues menées étant pourvue de contre-empreintes,

- une barre d'assemblage comportant une poutrelle présentant une première extrémité solidaire du coulisseau longitudinal, un coulisseau transversal monté coulissant sur la poutrelle parallèlement à une direction transversale parallèle à la surface et perpendiculaire à la direction longitudinale, un deuxième système d'entraînement motorisé agencé pour déplacer le coulisseau transversal en translation le long de la poutrelle parallèlement à la direction transversale, et un coulisseau d'ajustement autobloquant et monté coulissant sur la poutrelle selon la direction transversale et solidaire du châssis mené,
- un module de support comportant un sabot solidaire du coulisseau transversal, un châssis monté coulissant sur le sabot selon une direction verticale et sur lequel est fixé l'outil, et un troisième système d'entraînement motorisé agencé pour déplacer le châssis en translation par rapport au sabot parallèlement à la direction verticale.

Avantageusement, le système optique est fixé sur le module de support.

L'invention propose également un procédé de fonctionnement d'un système de support-outil précédent, comprenant :
- une étape de déplacement au cours de laquelle l'unité de contrôle commande le déplacement du système optique au-dessus d'une position attendue d'un trou,
- une étape de capture au cours de laquelle le système optique capture une image de ladite zone et la transmet à l'unité de contrôle,
- une étape d'analyse au cours de laquelle l'unité de contrôle analyse l'image de ladite zone pour détecter le trou et sa position réelle,
- si la position réelle ne correspond pas à la position attendue, une étape de positionnement au cours de laquelle l'unité de contrôle commande le déplacement de l'outil, afin de positionner l'embout de travail à la verticale dudit trou ainsi détecté, et une étape de bouclage au cours de laquelle le procédé boucle sur l'étape de capture,
- si la position réelle du trou correspond à la position attendue dudit trou, une étape d'abaissement au cours de laquelle l'unité de contrôle commande la descente de l'outil pour positionner l'embout de l'outil en position de travail,
- une étape de travail au cours de laquelle l'unité de contrôle commande l'outil pour le faire travailler,
- une étape de relèvement au cours de laquelle l'unité de contrôle commande la remontée de l'outil,
- une étape de vérification au cours de laquelle l'unité de contrôle vérifie si la partie de la surface pouvant être atteinte par l'outil a été entièrement balayée par le système optique,
- si non, une deuxième étape de bouclage au cours de laquelle le procédé boucle sur l'étape de déplacement,
- si oui, une étape de remise en place au cours de laquelle l'unité de contrôle commande le déplacement du support-outil au-dessus d'une autre partie de la surface à balayer, et
- une troisième étape de bouclage au cours de laquelle le procédé boucle sur l'étape de déplacement.

Avantageusement, le procédé de fonctionnement comporte entre l'étape de travail et l'étape de relèvement, une étape de résultat au cours de laquelle l'outil envoie à l'unité de contrôle des données relatives au travail effectué, et l'unité de contrôle stocke ces données.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue en perspective d'un système de support-outil selon l'invention,
la Fig. 2 montre un algorithme d'un procédé de fonctionnement du système de support-outil selon l'invention, et
la Fig. 3 est une représentation schématique d'une unité de contrôle.

### EXPOSE DETAILLE DE MODES DE REALISATION

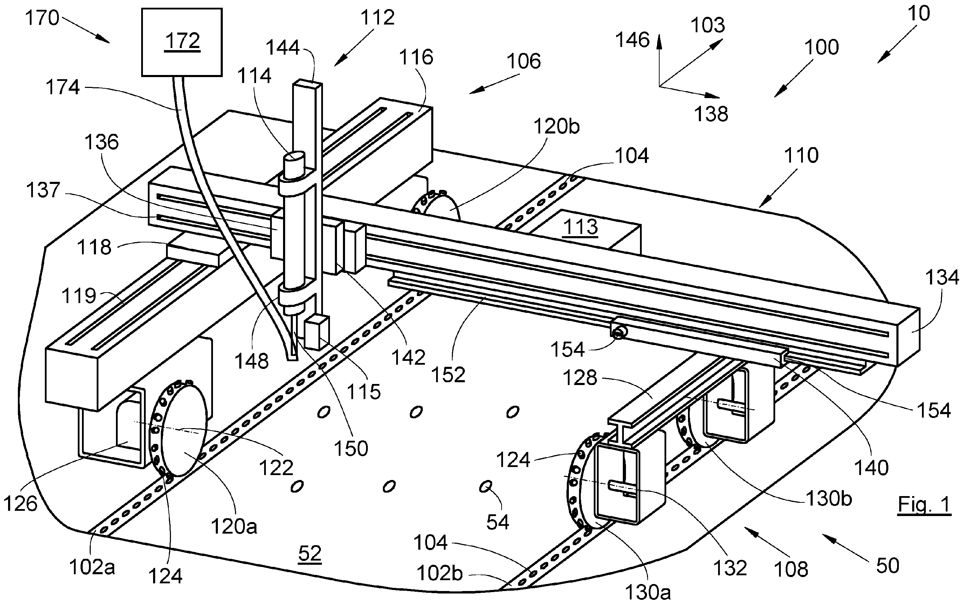

Dans la description qui suit, les termes relatifs à une position sont pris en référence à un système de support-outil disposé sur une pièce tel qu'un plancher d'aéronef par exemple, c'est-à-dire comme il est représenté sur la Fig. 1.

La Fig. 1 montre un système de support-outil 10 qui est positionné sur une surface 52 d'une pièce 50 comme par exemple un plancher d'aéronef qui présente une pluralité de trous 54. Le système de support-outil 10 est destiné à travailler les trous 54, comme par exemple à visser une vis dans chacun des trous 54 lorsque l'outil est une visseuse, ou à aléser chacun des trous lorsque l'outil est une perceuse.

Le système de support-outil 10 comporte un premier et un deuxième rails 102a-b, chacun s'étendant selon une même direction longitudinale 103, fixé sur la surface 52 de la pièce 50 et présentant des empreintes 104 régulièrement réparties sur sa longueur.

Le système de support-outil 10 comporte également :
- un système optique 115 configuré pour capturer au moins une image de la surface 52 et apte à être déplacé sur le support-outil mobile 100,
- pour chaque rail 102a-b, au moins une roue 120a-b, 130a-b apte à être déplacée sur ledit rail 102a-b, et
- un outil 114 apte à être déplacé sur le support-outil mobile 100 et portant un embout de travail 150,
- une unité de contrôle 113 configurée pour commander le déplacement du support-outil mobile 100 sur les rails 102a-b et le déplacement de l'outil 114 sur le support-outil mobile 100.

Chaque rail 102a-b peut être un élément de la pièce 50. Par exemple dans le cas d'un plancher d'aéronef, chaque rail 102a-b est le rail sur lequel les sièges sont fixés.

Afin de déplacer le système optique 115, l'outil 114, le support-outil mobile 100 comportent des mécanismes appropriés qui permettent ces déplacements par rapport aux roues 120a-b, 130a-b.

Afin d'empêcher le glissement des roues 120a-b, 130a-b sur les rails 102a-b, pour chaque rail 102a-b, au moins une des au moins une roue 120a-b, 130a-b se déplaçant sur ledit rail 102a-b comporte sur sa bande de roulement des contre-empreintes 124, chacune ayant une forme complémentaire à celle des empreintes 104 du rail 102a-b.

Dans le mode de réalisation de l'invention présenté sur la Fig. 1, il y a quatre roues 120a-b, 130a-b, à savoir deux pour chaque rail 102a-b, et les quatre sont munies de contre-empreintes 124.

Les empreintes 104 sont ici des perçages disposés régulièrement les uns à la suite des autres. Les contre-empreintes 124 sont des ergots disposés les uns à la suite des autres le long de la bande de roulement de chaque roue meneuse 120a-b. La coopération des empreintes 104 et des contre-empreintes 124 évite le glissement des roues meneuses 120a-b sur la surface 52 et assure un déplacement linéaire le long du premier rail 102a.

Afin de contrôler les différents déplacements et le fonctionnement général du système de support-outil 10 qui est décrit ci-après, l'unité de contrôle 113 est configurée en outre pour :
- analyser une image capturée par le système optique 115 et détecter la présence et une position réelle d'un trou 54,
- calculer la distance entre la position réelle du trou 54 et une position attendue du trou et comparer cette distance à un seuil prédéfini, et
- vérifier si la partie de la surface 52 pouvant être atteinte par l'outil 114 a été entièrement balayée par le système optique.

Le système optique 115 est constitué par exemple d'une caméra dont le capteur est orienté vers la surface 52.

Dans le mode de réalisation de l'invention présenté sur la Fig. 1, le support-outil 100 comporte en outre :
- un chariot menant 106,
- un chariot mené 108,
- une barre d'assemblage 110, et
- un module de support 112.

Le chariot menant 106 comporte :
- un châssis menant 116 qui prend ici la forme d'une barre s'étendant selon la direction longitudinale 103,
- un coulisseau longitudinal 118 monté coulissant sur le châssis menant 116 parallèlement à la direction longitudinale 103,
- un premier système d'entraînement motorisé agencé dans le châssis menant 116 pour coopérer avec le coulisseau longitudinal 118 afin de le déplacer en translation le long du châssis menant 116 parallèlement à la direction longitudinale 103, et
- deux roues meneuses 120a-b, chacune étant motorisée et montée mobile en rotation sur le châssis menant 116 autour d'un axe de rotation 122 parallèle au plan du premier rail 102a et perpendiculaire à la direction longitudinale 103 du premier rail 102a, chaque roue meneuse 120a-b comportant sur sa bande de roulement, des contre-empreintes 124.

Chaque roue meneuse 120a-b est entraînée en rotation par un moteur 126 fixé sur le châssis menant 116. La mise en place de deux moteurs 126 permet d'utiliser des moteurs moins lourds ce qui évite d'avoir à prévoir un renforcement structurel du châssis menant 116.

Le premier système d'entraînement motorisé est par exemple un système comportant une vis sans fin dont l'axe est parallèle à la direction longitudinale 103 et un moteur prévu pour entraîner en rotation la vis sans fin. La vis sans fin engrène alors avec un écrou du coulisseau longitudinal 118 pour le déplacer en translation dans un sens ou un autre selon le sens de rotation de la vis sans fin. Le guidage en translation du coulisseau longitudinal 118 est assuré ici par deux rainures 119 parallèles que le châssis menant 116 présente à cet effet.

Afin de commander la rotation des roues meneuses 120a-b et le déplacement du coulisseau longitudinal 118, l'unité de contrôle 113 est configurée pour commander les moteurs 126, et le premier système d'entraînement motorisé.

Le chariot mené 108 comporte :
- un châssis mené 128 qui prend ici la forme d'une barre s'étendant selon la direction longitudinale 103, et
- deux roues menées 130a-b, chacune étant montée mobile libre en rotation sur le châssis mené 128 autour d'un axe de rotation 132 parallèle au plan du deuxième rail 102b et perpendiculaire à la direction longitudinale 103 du deuxième rail 102b. Chaque roue menée 130a-b comporte sur sa bande de roulement, des contre-empreintes 124.

La barre d'assemblage 110 comporte :
- une poutrelle 134 présentant une première extrémité et une deuxième extrémité, la première extrémité étant solidaire du coulisseau longitudinal 118,
- un coulisseau transversal 136 monté coulissant sur la poutrelle 134 parallèlement à une direction transversale 138 parallèle au plan des rails 102a-b et perpendiculaire à la direction longitudinale 103 des rails 102a-b,
- un deuxième système d'entraînement motorisé agencé dans la poutrelle 134 pour coopérer avec le coulisseau transversal 136 afin de le déplacer en translation le long de la poutrelle 134 parallèlement à la direction transversale 138, et
- un coulisseau d'ajustement 140 autobloquant et monté coulissant sur la poutrelle 134 selon la direction transversale 138 et solidaire du châssis mené 128.

Le coulisseau d'ajustement 140 se déplace entre la première extrémité et la deuxième extrémité.

Le deuxième système d'entraînement motorisé est par exemple un système comportant une vis sans fin dont l'axe est parallèle à la direction transversale 138 et un moteur prévu pour entraîner en rotation la vis sans fin. La vis sans fin engrène alors avec un écrou du coulisseau transversal 136 pour le déplacer en translation dans un sens ou un autre selon le sens de rotation de la vis sans fin. Le guidage en translation du coulisseau transversal 136 est assuré ici par deux rainures 137 parallèles que la poutrelle 134 présente à cet effet.

Afin de commander le déplacement du coulisseau transversal 136, l'unité de contrôle 113 est configurée pour commander le deuxième système d'entraînement motorisé.

La liaison glissière qui assure la translation du coulisseau d'ajustement 140 est assurée par un système de guidage linéaire. Dans le mode de réalisation de l'invention présenté sur la Fig. 1, le système de guidage linéaire est constitué d'un rail en T 152 fixé sous la poutrelle 134 et d'une rainure 154 que le coulisseau d'ajustement 140 présente et qui lui permet de s'emmancher sur le rail en T 152.

Le système de guidage linéaire comprend également un frein manuel 154 agencé sur le coulisseau d'ajustement 140 et qui doit être manoeuvré par l'opérateur pour libérer le coulisseau d'ajustement 140 et permettre son libre déplacement en translation le long du rail en T 152. Dans le mode de réalisation de l'invention présenté ici, le frein manuel 154 prend la forme d'une vis pointeau qui se serre contre la poutrelle 134.

D'autres modes de réalisation sont envisageables pour le frein manuel 154.

Par exemple, le frein manuel peut consister en un ensemble de crans réalisés le long de la poutrelle 134 et d'un plot monté sur ressort et mobile entre une position enclenchée dans laquelle le plot est en prise avec un cran pour bloquer le coulisseau d'ajustement 140 et une position déclenchée dans laquelle le plot est à distance du cran et libère le coulisseau d'ajustement 140, le ressort contraignant le plot en position enclenchée.

Selon un autre exemple, le frein manuel peut être une poignée pouvant être vissée et dont une partie vient en appui contre le rail en T 152.

Le module de support 112 comporte :
- un sabot 142 solidaire du coulisseau transversal 136,
- un châssis 144 monté coulissant sur le sabot 142 selon une direction verticale 146 perpendiculaire au plan des rails 102a-b et sur lequel l'outil 114 est fixé, et
- un troisième système d'entraînement motorisé agencé dans le sabot 142 pour coopérer avec le châssis 144 afin de le déplacer en translation par rapport au sabot 142 parallèlement à la direction verticale 146.

La fixation de la visseuse 114 sur le châssis 144 s'effectue par tous types de moyens de fixation 148 appropriés comme par exemple un système de serrage.

Le troisième système d'entraînement motorisé est par exemple un système comportant une vis sans fin dont l'axe est parallèle à la direction verticale 146 et un moteur prévu pour entraîner en rotation la vis sans fin. La vis sans fin engrène alors avec un écrou du châssis 144 pour le déplacer en translation dans un sens ou un autre selon le sens de rotation de la vis sans fin.

Afin de commander le déplacement du châssis 144, l'unité de contrôle 113 est configurée pour commander le troisième système d'entraînement motorisé.

L'outil 114 présente un embout de travail 150, comme par exemple un embout de vissage ou une mèche de perçage.

Le système optique 115 est fixé sur le module de support 112 et, plus particulièrement sur le châssis 144.

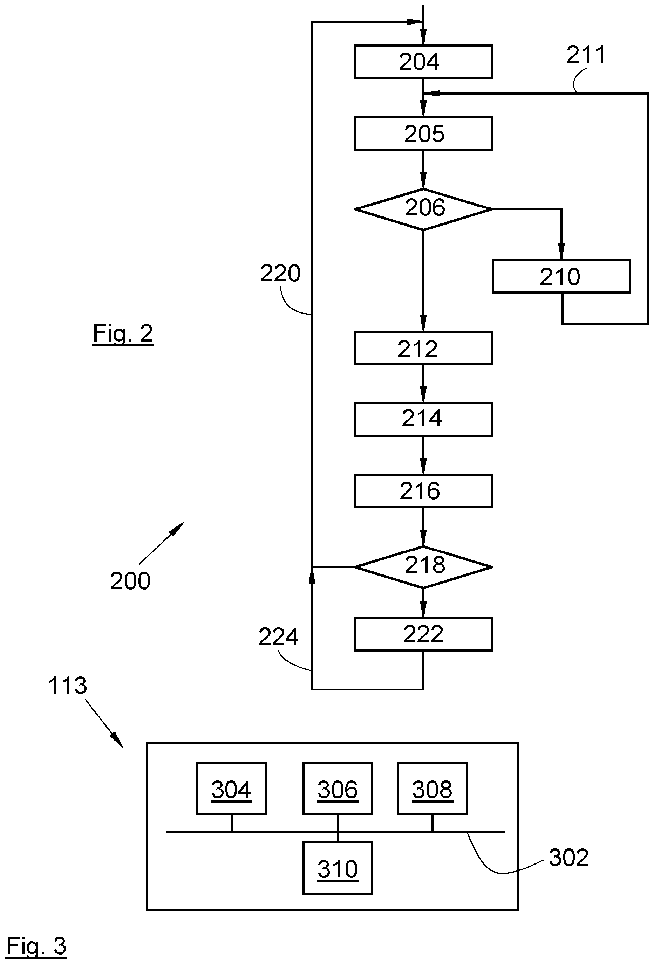

La Fig. 3 est une représentation schématique de l'unité de contrôle 113 qui comprend classiquement, reliés par un bus de communication 302: un processeur ou CPU 304 (« Central Processing Unit » en anglais), une mémoire vive RAM 306 (« Random Access Memory » en anglais), une mémoire morte ROM 308 (« Read Only Memory » en anglais), une unité de stockage et au moins une interface de communication 310, permettant de communiquer avec le système optique 115, l'outil 114, les moteurs 126 des roues meneuses 120a-b et les moteurs des systèmes d'entraînement.

Le processeur est capable d'exécuter des instructions chargées dans la RAM 306 à partir de la ROM 308. Lorsque l'équipement est mis sous tension, le processeur 304 est capable de lire de la RAM 306 des instructions et de les exécuter. Ces instructions forment un programme d'ordinateur causant la mise en oeuvre, par le processeur 304, de tout ou partie des algorithmes et étapes décrits ci-dessous.

La Fig. 2 montre un algorithme 200 d'un procédé de fonctionnement du système de support-outil 10.

La mise en place du système de support-outil 10 au-dessus d'une partie de la surface 52 consiste à placer les roues meneuses 120a-b sur le premier rail 102a et les roues menées 130a-b sur le deuxième rail 102b de manière à ce que les contre-empreintes 124 soient en prise avec les empreintes 104 et à initialiser la position du système optique 115 à une position servant de référence géométrique. L'unité de contrôle 113, et plus particulièrement la RAM 306, est chargée avec un fichier issu de conception assisté par ordinateur (CAO), dans lequel sont enregistrées les coordonnées attendues des trous 54 par rapport à la référence géométrique.

Le procédé de fonctionnement comporte alors :
- une étape de déplacement 204 au cours de laquelle l'unité de contrôle 113 commande le déplacement du système optique 115 au-dessus d'une position attendue d'un trou 54, en particulier en déplaçant au moins un parmi le coulisseau longitudinal 118 et le coulisseau transversal 136 par l'intermédiaire du système d'entraînement approprié,
- une étape de capture 205 au cours de laquelle le système optique 115 capture une image de ladite zone et la transmet à l'unité de contrôle 113,
- une étape d'analyse 206 au cours de laquelle l'unité de contrôle 113 analyse l'image de ladite zone pour détecter le trou 54 et sa position réelle,
- si la position réelle ne correspond pas à la position attendue, une étape de positionnement 210 au cours de laquelle l'unité de contrôle 113 commande le déplacement de l'outil 114 afin de positionner l'embout de travail 150 à la verticale dudit trou 54 ainsi détecté, en particulier en déplaçant au moins un parmi le coulisseau longitudinal 118, le coulisseau transversal 136 par l'intermédiaire du système d'entraînement, et une étape de bouclage 211 au cours de laquelle le procédé boucle sur l'étape de capture 205,
- si la position réelle correspond à la position attendue, une étape d'abaissement 212 au cours de laquelle l'unité de contrôle 113 commande la descente de l'outil 114, en particulier en descendant le châssis 144 par l'intermédiaire du troisième système d'entraînement, pour positionner l'embout de travail 150 en position de travail,
- une étape de travail 214 au cours de laquelle l'unité de contrôle 113 commande l'outil 114 pour le faire travailler,
- une étape de relèvement 216 au cours de laquelle l'unité de contrôle 113 commande la remontée de l'outil 114, en particulier en remontant le châssis 144 par l'intermédiaire du troisième système d'entraînement,
- une étape de vérification 218 au cours de laquelle l'unité de contrôle 113 vérifie si la partie de la surface 52 pouvant être atteinte par l'outil 114, en particulier la partie comprise entre le chariot menant 106 et le chariot mené 108, a été entièrement balayée par le système optique 115,
- si non, une deuxième étape de bouclage 220 au cours de laquelle le procédé boucle sur l'étape de déplacement 204,
- si oui, une étape de remise en place 222 au cours de laquelle l'unité de contrôle 113 commande le déplacement du support-outil 100, en particulier par rotation des roues meneuses 120a-b, afin de déplacer le support-outil 100 au-dessus d'une autre partie de la surface 52 à balayer, et
- une troisième étape de bouclage 224 au cours de laquelle le procédé boucle sur l'étape de déplacement 204.

Un tel procédé et un tel système de support-outil permettent une détection automatique des trous 54 et la réalisation d'un travail au niveau de chaque trou 54, tout en balayant toute la surface 52, facilitant ainsi le travail de l'opérateur

L'étape d'analyse 206 consiste à analyser l'image capturée afin d'en déduire la position réelle du trou 54. Cette analyse s'effectue sur la base d'un système de traitement d'image approprié comme par exemple le système CV-X100 de la société KEYENCE et qui recherche dans l'image l'existence du trou 54 par reconnaissance de formes et permet de calculer les coordonnées de chaque trou 54 vu.

L'étape de positionnement 210 consiste, par bouclage successif, à placer correctement l'embout de travail 150, par exemple l'embout de visage ou la mèche par rapport au trou 54. Cette mise en position s'appuie en particulier sur les caractéristiques dimensionnelles du système de support-outil 10. En effet, la position du système optique 115 par rapport à l'embout de travail 150 est connue par construction, et la position du trou 54 par rapport au système optique 115 est connue de l'étape d'analyse 206. L'unité de contrôle 113 peut alors en déduire la position du trou 54 par rapport à l'embout de travail 150 et déplacer le coulisseau longitudinal 118 et/ou le coulisseau transversal 136 et/ou les roues meneuses 120a-b afin de positionner l'embout de travail 150 à la verticale du trou 54. Plus particulièrement, si la distance entre la position réelle du trou 54 et la position attendue du trou 54 est inférieure à un seuil prédéfini, l'étape de positionnement 210 n'est pas réalisée. Le seuil prédéfini est lié entre autres aux tolérances géométriques et aux jeux de fonctionnement des différentes pièces mobiles.

L'étape de vérification 218 permet lorsque toute la zone de la surface 52 comprise entre le chariot menant 106 et le chariot mené 108 a été balayée par le système optique 115, de déplacer le support-outil 100 pour le placer au-dessus d'une nouvelle zone à balayer au cours de l'étape de remise en place 222.

Dans le mode de réalisation de l'invention présenté sur la Fig. 1, l'unité de contrôle 113 est agencée pour commander le premier système d'entraînement afin de déplacer le coulisseau longitudinal 118, le deuxième système d'entraînement afin de déplacer le coulisseau transversal 136, le moteur approprié afin de déplacer les roues meneuses 120a-b, le troisième système d'entraînement afin d'abaisser et relever le châssis 144, et l'outil 114.

Dans le cas où l'outil 114 est une visseuse, le système de support-outil 10 comporte également une unité d'alimentation 170. L'unité d'alimentation 170 comprend un réservoir 172 pour y stocker les vis, par exemple du type bol vibrant, un tube de transfert 174 connecté, par exemple pneumatiquement, au réservoir 172 et agencé pour permettre à une vis du réservoir 172 de placer sa tête sous l'embout de vissage 150. L'unité d'alimentation 170 peut être fixée sur l'un des chariots 106, 108 ou sur la barre d'assemblage 110, ou être disposée fixe à côté. Une telle unité d'alimentation 170 est connue de l'homme du métier et permet dès qu'une vis est vissée et extraite du tube de transfert 174, d'amener une nouvelle vis sous l'embout de vissage 150. Une telle unité d'alimentation 170 est par exemple un système de la société FIAM et désignée sous l'appellation « Autofeed Tightening Module ».

L'étape d'abaissement 212 consiste alors plus particulièrement à amener la tige filetée de la vis, présente sous l'embout de vissage 150, dans le trou 54, et l'embout de vissage 150 contre la tête de la vis.

L'étape de travail 214 consiste alors plus particulièrement à faire tourner l'embout de vissage 150 dans le sens de vissage de la vis, tout en commandant le châssis 144 en descente pour suivre la vis lors de son enfoncement dans le trou 54.

D'une manière générale, le procédé de fonctionnement 200 peut comporter, entre l'étape de travail 214 et l'étape de relèvement 216, une étape de résultat au cours de laquelle l'outil 114 envoie à l'unité de contrôle 113 des données relatives au travail effectué, et l'unité de contrôle 113 stocke ces données dans sa mémoire vive 306.

L'ensemble de ces données peut ensuite être consulté par l'opérateur qui peut ainsi vérifier si le travail de l'outil s'est parfaitement déroulé à chaque trou 54.

Ces données sont par exemple des données relatives au fait que le travail s'est bien effectué ou mal effectué et qu'il y a eu un problème.

Dans le cas où l'outil 114 est une visseuse, les données relatives au travail effectué consistent par exemple pour la visseuse à compter le nombre de tours dont il a fallu tourner la vis pour atteindre un couple de serrage prédéfini. Ainsi, si le nombre de tour est insuffisant par rapport à un intervalle prédéfini, cela signifie par exemple que la vis s'est bloquée avant d'atteindre la position finale attendue, et si le nombre de tours est trop important par rapport à l'intervalle prédéfini, cela signifie que la vis a tourné dans le vide et est potentiellement abîmée.

## Revendications

1. Système de support-outil (10) pour travailler des trous (54) d'une surface (52), ledit système de support-outil (10) comportant:
- un premier et un deuxième rail (102a-b) parallèles entre eux et fixés sur la surface (52), chacun des rails (102a-b) présentant des empreintes (104) régulièrement réparties sur sa longueur, et
- un support-outil mobile (100) comportant :
- un système optique (115) configuré pour capturer au moins une image de la surface (52) et apte à être déplacé sur le support-outil mobile (100),
- pour chaque rail (102a-b), au moins une roue (120a-b, 130a-b) apte à être déplacée sur ledit rail (102a-b), et
- un outil (114) apte à être déplacé sur le support-outil mobile (100) et portant un embout de travail (150),
- une unité de contrôle (113) configurée pour commander le déplacement du support-outil mobile (100) sur les rails (102a-b), le déplacement de l'outil (114) et le déplacement du système optique (115) sur le support-outil mobile (100),
ledit système de support-outil (10) étant tel que, pour chaque rail (102a-b), au moins une des au moins une roue (120a-b, 130a-b) se déplaçant sur ledit rail (102a-b) comporte sur sa bande de roulement des contre-empreintes (124), chacune ayant une forme complémentaire à celle des empreintes (104) dudit rail (102a-b) et tel que l'unité de contrôle (113) est configurée pour :
- analyser une image capturée par le système optique (115) et détecter la présence et une position réelle d'un trou (54),
- calculer la distance entre la position réelle du trou (54) et une position attendue du trou et comparer cette distance à un seuil prédéfini, et
- vérifier si la partie de la surface (52) pouvant être atteinte par l'outil (114) a été entièrement balayée par le système optique.

2. Système de support-outil (10) selon la revendication 1, **caractérisé en ce que** chaque empreinte (104) est un perçage et **en ce que** chaque contre-empreinte (124) est un ergot.

3. Système de support-outil (10) selon l'une quelconque des revendications précédentes, **caractérisé en ce que** le support-outil (100) comprend :
- un chariot menant (106) comportant un châssis menant (116), un coulisseau longitudinal (118) monté coulissant sur le châssis menant (116) parallèlement à une direction longitudinale (103) des rails (102a-b), un premier système d'entraînement motorisé agencé pour déplacer le coulisseau longitudinal (118) le long du châssis menant (116), et deux roues meneuses (120a-b), chacune étant motorisée et montée mobile en rotation sur le châssis menant (116) autour d'un axe de rotation (122) parallèle au plan du premier rail (102a) et perpendiculaire à la direction longitudinale (103), chacune des deux roues meneuses (120a-b) étant pourvue de contre-empreintes (124),
- un chariot mené (108) comportant un châssis mené (128), et deux roues menées (130a-b), chacune étant montée mobile libre en rotation sur le châssis mené (128) autour d'un axe de rotation (132) parallèle au plan du deuxième rail (102b) et perpendiculaire à la direction longitudinale (103), chacune des deux roues menées (130a-b) étant pourvue de contre-empreintes (124),
- une barre d'assemblage (110) comportant une poutrelle (134) présentant une première extrémité solidaire du coulisseau longitudinal (118), un coulisseau transversal (136) monté coulissant sur la poutrelle (134) parallèlement à une direction transversale (138) parallèle à la surface (52) et perpendiculaire à la direction longitudinale (103), un deuxième système d'entraînement motorisé agencé pour déplacer le coulisseau transversal (136) en translation le long de la poutrelle (134) parallèlement à la direction transversale (138), et un coulisseau d'ajustement (140) autobloquant et monté coulissant sur la poutrelle (134) selon la direction transversale (138) et solidaire du châssis mené (128),
- un module de support (112) comportant un sabot (142) solidaire du coulisseau transversal (136), un châssis (144) monté coulissant sur le sabot (142) selon une direction verticale (146) et sur lequel est fixé l'outil (114), et un troisième système d'entraînement motorisé agencé pour déplacer le châssis (144) en translation par rapport au sabot (142) parallèlement à la direction verticale (146).

4. Système de support-outil (10) selon la revendication 3, **caractérisé en ce que** le système optique (115) est fixé sur le module de support (112).

5. Procédé de fonctionnement (200) d'un système de support-outil (10) selon la revendication 1, comprenant :
- une étape de déplacement (204) au cours de laquelle l'unité de contrôle (113) commande le déplacement du système optique (115) au-dessus d'une position attendue d'un trou (54),
- une étape de capture (205) au cours de laquelle le système optique (115) capture une image de ladite zone et la transmet à l'unité de contrôle (113),
- une étape d'analyse (206) au cours de laquelle l'unité de contrôle (113) analyse l'image de ladite zone pour détecter le trou (54) et sa position réelle,
- si la position réelle ne correspond pas à la position attendue, une étape de positionnement (210) au cours de laquelle l'unité de contrôle (113) commande le déplacement de l'outil (114), afin de positionner l'embout de travail (150) à la verticale dudit trou (54) ainsi détecté, et une étape de bouclage (211) au cours de laquelle le procédé boucle sur l'étape de capture (205),
- si la position réelle du trou (54) correspond à la position attendue dudit trou (54), une étape d'abaissement (212) au cours de laquelle l'unité de contrôle (113) commande la descente de l'outil (114) pour positionner l'embout (150) de l'outil (114) en position de travail,
- une étape de travail (214) au cours de laquelle l'unité de contrôle (113) commande l'outil (114) pour le faire travailler,
- une étape de relèvement (216) au cours de laquelle l'unité de contrôle (113) commande la remontée de l'outil (114),
- une étape de vérification (218) au cours de laquelle l'unité de contrôle (113) vérifie si la partie de la surface (52) pouvant être atteinte par l'outil (114) a été entièrement balayée par le système optique (115),
- si non, une deuxième étape de bouclage (220) au cours de laquelle le procédé boucle sur l'étape de déplacement (204),
- si oui, une étape de remise en place (222) au cours de laquelle l'unité de contrôle (113) commande le déplacement du support-outil (100) au-dessus d'une autre partie de la surface (52) à balayer, et
- une troisième étape de bouclage (224) au cours de laquelle le procédé boucle sur l'étape de déplacement (204).

6. Procédé de fonctionnement (200) selon la revendication 5, **caractérisé en ce qu'**il comporte entre l'étape de travail (214) et l'étape de relèvement (216), une étape de résultat au cours de laquelle l'outil (114) envoie à l'unité de contrôle (113) des données relatives au travail effectué, et l'unité de contrôle (113) stocke ces données.

## Patentansprüche

1. Werkzeughalterungssystem (10) zum Bearbeiten von Löchern (54) einer Fläche (52), wobei das Werkzeughalterungssystem (10) umfasst:
- eine erste und eine zweite Schiene (102a-b), die zueinander parallel sind und auf der Fläche (52) befestigt sind, wobei jede der Schienen (102a-b) Vertiefungen (104) aufweist, die gleichmäßig auf ihrer Länge verteilt sind, und
- eine bewegliche Werkzeughalterung (100), welche umfasst:
- ein optisches System (115), das dafür ausgelegt ist, wenigstens ein Bild der Fläche (52) zu erfassen, und auf der beweglichen Werkzeughalterung (100) verlagerbar ist,
- für jede Schiene (102a-b) wenigstens ein Rad (120a-b, 130a-b), das auf der Schiene (102a-b) verlagerbar ist, und
- ein Werkzeug (114), das auf der beweglichen Werkzeughalterung (100) verlagerbar ist und ein Arbeitsansatzstück (150) trägt,
- eine Steuereinheit (113), die dafür ausgelegt ist, die Verlagerung der beweglichen Werkzeughalterung (100) auf den Schienen (102a-b), die Verlagerung des Werkzeugs (114) und die Verlagerung des optischen Systems (115) auf der beweglichen Werkzeughalterung (100) zu steuern, wobei das Werkzeughalterungssystem (10) derart beschaffen ist, dass für jede Schiene (102a-b) wenigstens eines des wenigstens einen Rades (120a-b, 130a-b), das auf dieser Schiene (102a-b) verlagerbar ist, auf seinem Laufstreifen Vertiefungs-Gegenstücke (124) aufweist, die jeweils eine Form aufweisen, die zu derjenigen der Vertiefungen (104) der Schiene (102a-b) komplementär ist, und derart, dass die Steuereinheit (113) dafür ausgelegt ist:
- ein Bild, das von dem optischen System (115) erfasst wurde, zu analysieren und das Vorhandensein und eine tatsächliche Position eines Loches (54) zu erkennen,
- den Abstand zwischen der tatsächlichen Position des Loches (54) und einer erwarteten Position des Loches zu berechnen und diesen Abstand mit einem vorbestimmten Schwellenwert zu vergleichen, und
- zu überprüfen, ob der Teil der Fläche (52), der von dem Werkzeug (114) erreicht werden kann, von dem optischen System vollständig abgetastet worden ist.

2. Werkzeughalterungssystem (10) nach Anspruch 1, **dadurch gekennzeichnet, dass** jede Vertiefung (104) eine Durchbohrung ist, und dadurch, dass jedes Vertiefungs-Gegenstück (124) ein Vorsprung ist.

3. Werkzeughalterungssystem (10) nach einem der vorhergehenden Ansprüche, **dadurch gekennzeichnet, dass** die Werkzeughalterung (100) umfasst:
- einen führenden Schlitten (106), der ein führendes Gestell (116), einen Längsgleitblock (118), der auf dem führenden Gestell (116) parallel zu einer Längsrichtung (103) der Schienen (102a-b) gleitend gelagert ist, ein erstes motorisiertes Antriebssystem, das dafür eingerichtet ist, den Längsgleitblock (118) entlang des führenden Gestells (116) zu verlagern, und zwei Führungsräder (120a-b), die jeweils motorisiert und auf dem führenden Gestell (116) drehbeweglich um eine Drehachse (122) gelagert sind, die zur Ebene der ersten Schiene (102a) parallel und zur Längsrichtung (103) senkrecht ist, aufweist, wobei jedes der zwei Führungsräder (120a-b) mit Vertiefungs-Gegenstücken (124) versehen ist,
- einen geführten Schlitten (108), der ein geführtes Gestell (128) und zwei geführte Räder (130a-b), die jeweils auf dem geführten Gestell (128) frei drehbeweglich um eine Drehachse (132) gelagert sind, die zur Ebene der zweiten Schiene (102b) parallel und zur Längsrichtung (103) senkrecht ist, aufweist, wobei jedes der zwei geführten Räder (130a-b) mit Vertiefungs-Gegenstücken (124) versehen ist,
- eine Verbindungsstange (110), die einen Träger (134), der ein mit dem Längsgleitblock (118) fest verbundenes erstes Ende aufweist, einen Quergleitblock (136), der auf dem Träger (134) parallel zu einer Querrichtung (138), die zu der Fläche (52) parallel und zu der Längsrichtung (103) senkrecht ist, gleitend gelagert ist, ein zweites motorisiertes Antriebssystem, das dafür eingerichtet ist, den Quergleitblock (136) entlang des Trägers (134) parallel zu der Querrichtung (138) translatorisch zu verlagern, und einen Anpassungsgleitblock (140), der selbstblockierend und auf dem Träger (134) in der Querrichtung (138) gleitend gelagert ist und mit dem geführten Gestell (128) fest verbunden ist, aufweist,
- ein Halterungsmodul (112), das einen mit dem Quergleitblock (136) fest verbundenen Unterlageklotz (142), ein Gestell (144), das auf dem Unterlageklotz (142) in einer vertikalen Richtung (146) gleitend gelagert ist und an dem das Werkzeug (114) befestigt ist, und ein drittes motorisiertes Antriebssystem, das dafür eingerichtet ist, das Gestell (144) in Bezug auf den Unterlageklotz (142) parallel zu der vertikalen Richtung (146) translatorisch zu verlagern, aufweist.

4. Werkzeughalterungssystem (10) nach Anspruch 3, **dadurch gekennzeichnet, dass** das optische System (115) an dem Halterungsmodul (112) befestigt ist.

5. Verfahren zum Betrieb (200) eines Werkzeughalterungssystems (10) nach Anspruch 1, umfassend:
- einen Verlagerungsschritt (204), in welchem die Steuereinheit (113) die Verlagerung des optischen Systems (115) in eine Position über einer erwarteten Position eines Loches (54) steuert,
- einen Erfassungsschritt (205), in welchem das optische System (115) ein Bild des Bereichs erfasst und es zu der Steuereinheit (113) überträgt,
- einen Analyseschritt (206), in welchem die Steuereinheit (113) das Bild des Bereichs analysiert, um das Loch (54) und dessen tatsächliche Position zu erkennen,
- falls die tatsächliche Position nicht der erwarteten Position entspricht, einen Positionierungsschritt (210), in welchem die Steuereinheit (113) die Verlagerung des Werkzeugs (114) steuert, um das Arbeitsansatzstück (150) vertikal über dem so erkannten Loch (54) zu positionieren, und einen Rücksprungschritt (211), in welchem das Verfahren zu dem Erfassungsschritt (205) zurückspringt,
- falls die tatsächliche Position des Loches (54) der erwarteten Position des Loches (54) entspricht, einen Absenkschritt (212), in welchem die Steuereinheit (113) die Abwärtsbewegung des Werkzeugs (114) steuert, um das Ansatzstück (150) des Werkzeugs (114) in der Arbeitsposition zu positionieren,
- einen Arbeitsschritt (214), in welchem die Steuereinheit (113) das Werkzeug (114) steuert, um zu bewirken, dass es arbeitet,
- einen Anhebeschritt (216), in welchem die Steuereinheit (113) die Aufwärtsbewegung des Werkzeugs (114) steuert,
- einen Überprüfungsschritt (218), in welchem die Steuereinheit (113) überprüft, ob der Teil der Fläche (52), der von dem Werkzeug (114) erreicht werden kann, von dem optischen System (115) vollständig abgetastet worden ist,
- falls nein, einen zweiten Rücksprungschritt (220), in welchem das Verfahren zu dem Verlagerungsschritt (204) zurückspringt,
- falls ja, einen Zurücksetzungsschritt (222), in welchem die Steuereinheit (113) die Verlagerung der Werkzeughalterung (100) in eine Position über einem anderen Teil der abzutastenden Fläche (52) steuert, und
- einen dritten Rücksprungschritt (224), in welchem das Verfahren zu dem Verlagerungsschritt (204) zurückspringt.

6. Verfahren zum Betrieb (200) nach Anspruch 5, **dadurch gekennzeichnet, dass** es zwischen dem Arbeitsschritt (214) und dem Anhebeschritt (216) einen Ergebnisschritt umfasst, in welchem das Werkzeug (114) an die Steuereinheit (113) Daten sendet, welche die ausgeführte Arbeit betreffen, und die Steuereinheit (113) diese Daten speichert.

## Claims

1. Tool-support system (10) for working on holes (54) of a surface (52), said tool-support system (10) including:
- parallel first and second rails (102a-b) fixed to the surface (52), each of the rails (102a-b) having imprints (104) regularly distributed over its length, and
- a mobile tool-support (100) including:
- an optical system (115) configured to capture at least one image of the surface (52) and adapted to be moved on the mobile tool-support (100),
- for each rail (102a-b), at least one wheel (120a-b, 130a-b) adapted to be moved on said rail (102a-b), and
- a tool (114) adapted to be moved on the mobile tool-support (100) and carrying a working tip (150),
- a control unit (113) configured to control the movement of the mobile tool-support (100) on the rails (102a-b), the movement of the tool (114) and the movement of the optical system (115) on the mobile tool-support (100),
said tool-support system (10) being such that, for each rail (102a-b), at least one of the at least one wheels (120a-b, 130a-b) moving on said rail (102a-b) includes on its rolling strip counter-imprints (124), each having a shape complementary to that of the imprints (104) of said rail (102a-b) and such that the control unit (113) is configured:
- to analyze an image captured by the optical system (115) and to detect the presence and a real position of a hole (54),
- to calculate the distance between the real position of the hole (54) and an expected position of the hole and to compare that distance to a predefined threshold, and
- to verify if the part of the surface (52) that can be reached by the tool (114) has been entirely scanned by the optical system.

2. Tool-support system (10) according to Claim 1, **characterized in that** each imprint (104) is a perforation and **in that** each counter-imprint (124) is a lug.

3. Tool-support system (10) according to either one of the preceding claims, **characterized in that** the tool-support (100) includes:
- a driving carriage (106) include a driving chassis (116), a longitudinal slide (118) mounted on the driving chassis (116) to slide parallel to a longitudinal direction (103) of the rails (102a-b), a first motorized drive system adapted to move the longitudinal slide (118) along the driving chassis (116), and two driving wheels (120a-b), each being motorized and mounted on the driving chassis (116) to rotate about a rotation axis (122) parallel to the plane of the first rail (102a) and perpendicular to the longitudinal direction (103), each of the two driving wheels (120a-b) including counter-imprints (124),
- a driven carriage (108) including a driven chassis (128), and two driven wheels (130a-b), each being mounted on the driven chassis (128) to be freely mobile in rotation about a rotation axis (132) parallel to the plane of the second rail (102b) and perpendicular to the longitudinal direction (103), each of the two driven wheels (130a-b) including counter-imprints (124),
- an assembly bar (110) including a beam (134) having a first end fastened to the longitudinal slide (118), a transverse slide (136) mounted on the beam (134) to slide parallel to a transverse direction (138) parallel to the surface (52) and perpendicular to the longitudinal direction (103), a second motorized drive system adapted to move the transverse slide (136) in translation along the beam (134) parallel to the transverse direction (138), and a self-locking adjustment slide (140) mounted on the beam (134) to slide in the transverse direction (138) and fastened to the driven chassis (128),
- a support module (112) including a shoe (142) fastened to the transverse slide (136), a chassis (144) mounted on the shoe (142) to slide in a vertical direction (146) and to which the tool (114) is fixed, and a third motorized drive system adapted to move the chassis (144) in translation relative to the shoe (142) parallel to the vertical direction (146).

4. Tool-support system (10) according to Claim 3, **characterized in that** the optical system (115) is fixed to the support module (112).

5. Method (200) of operating a tool-support system (10) according to Claim 1, including:
- a movement step (204) during which the control unit (113) commands the movement of the optical system (115) above an expected position of a hole (54),
- a capture step (205) during which the optical system (115) captures an image of said area and transmits it to the control unit (113),
- an analysis step (206) during which the control unit (113) analyzes the image of said area to detect the hole (54) and its real position,
- if the real position does not correspond to the expected position, a positioning step (210) during which the control unit (113) commands the movement of the tool (114) in order to position the working tip (150) in vertical alignment with said hole (54) detected in this way, and a looping step (211) during which the method loops to the capture step (205),
- if the real position of the hole (54) corresponds to the expected position of said hole (54), a lowering step (212) during which the control unit (113) commands the descent of the tool (114) to position the tip (150) of the tool (114) in a working position,
- a working step (214) during which the control unit (113) commands the tool (114) to cause it to work,
- a raising step (216) during which the control unit (113) commands the raising of the tool (114),
- a verification step (218) during which the control unit (113) verifies if the part of the surface (52) that can be reached by the tool (114) has been entirely scanned by the optical system (115),
- if not, a second looping step (220) during which the method loops to the movement step (204),
- if yes, a repositioning step (222) during which the control unit (113) commands the movement of the tool-support (100) above another part of the surface (52) to be scanned, and
- a third looping step (224) during which the method loops to the movement step (204).

6. Operating method (200) according to Claim 5, **characterized in that** it includes between the working step (214) and the raising step (216) a results step during which the tool (114) sends the control unit (113) data relating to the work effected and the control unit (113) stores that data.
